(19) Europäisches Patentamt

European Patent Office

Office européen des brevets

(11) **EP 1 731 661 A1**

(12) **EUROPEAN PATENT APPLICATION**
published in accordance with Art. 158(3) EPC

(43) Date of publication:
**13.12.2006 Bulletin 2006/50**

(51) Int Cl.:
*D07B 1/06* (2006.01)   *B60C 9/00* (2006.01)
*C22C 9/04* (2006.01)   *C23C 28/02* (2006.01)

(21) Application number: **05728620.5**

(22) Date of filing: **30.03.2005**

(86) International application number:
**PCT/JP2005/006699**

(87) International publication number:
**WO 2005/095707 (13.10.2005 Gazette 2005/41)**

(84) Designated Contracting States:
**DE FR GB IT**

(30) Priority: **31.03.2004 JP 2004105047**

(71) Applicant: **TOKUSEN KOGYO COMPANY LIMITED**
**Sumiyoshi-cho**
**Ono-shi**
**Hyogo 675-1361 (JP)**

(72) Inventors:
• **Yamauchi, Toshiyuki,**
  **Tokusen Kogyo., Co. Ltd.**
  **Hyogo 6751361 (JP)**

• **Yasunaga, Tatsuya,**
  **K K Kobe Seiko Sho**
  **Hyogo 6512271 (JP)**

(74) Representative: **Gille Hrabal Struck Neidlein Prop Roos**
**Patentanwälte**
**Brucknerstrasse 20**
**40593 Düsseldorf (DE)**

(54) **FILAMENT FOR REINFORCING RUBBER EXCELLENT IN CORROSION RESISTANCE, AND COMPOSITE OF THE FILAMENT AND RUBBER**

(57)     This invention provides a filamentous material for rubber reinforcement having excellent corrosion resistance, comprising:
a steel filament and
a coating layer containing Cu and Zn on a surface of the steel filament,
wherein:
a sum total in a length of a peripheral direction of the steel filament in a peripheral direction area in which the coating layer has a thickness of not less than 0.1 micrometers is not less than 50% in a full length in the peripheral direction of the steel filament when a cross section perpendicular to a longitudinal direction of the filamentous material is observed, and
in the above peripheral direction area,
(1) an average Cu content is 50% to 95% by mass in a depth direction area extending from an outermost surface of the coating layer to a position having a depth of 0.01 micrometers, and
(2) an average Zn content is not less than 60% by mass in a depth direction area extending from a position having a depth of 0.1 micrometers of the coating layer to the outermost surface of the steel filament.

FIG.1

EP 1 731 661 A1

**Description**

FIELD OF THE INVENTION

The present invention relates to a filamentous material for rubber reinforcement, and a composite material of the filamentous material for rubber reinforcement and a rubber, for example, to the filamentous material for rubber reinforcement that can be suitably used as a material for rubber reinforcement goods, such as tires, hoses and industrial use belts, and to the composite material obtained by combining the filamentous material for rubber reinforcement and a rubber(s).

BACKGROUND ART

Conventionally, steel cords for rubber reinforcement have been used as a material for rubber reinforcement products, such as tires, hoses and industrial use belts. By combining with a rubber, the steel cords for rubber reinforcement make intimate contact with the rubber, and improve strength of the obtained rubber products. Therefore, excellent adhesion is needed between the steel cords and the rubber. Such steel cords for rubber reinforcement are used, for example, for reinforcing tires.

For example, Japanese Unexamined Patent Publication No. 11-179419 discloses a method for manufacturing a wire for rubber reinforcement having excellent wire drawing workability and furthermore having excellent initial intimate contact with a rubber, as a technique of improving adhesion between steel cords and a rubber for tires. This technique forms a brass metal plating layer on a surface of a high carbon steel wire, then forms a copper plating layer on the brass plating layer, and subsequently, mechanically alloys the brass plating layer and the copper plating layer by drawing the obtained wire. Alloying the brass plating layer and the copper plating layer makes a coating layer having a higher Cu content in a nearer portion to the surface in a depth direction, and Cu that exists in an outermost surface of the coating layer forms moderate amounts of sulfides with the rubber, and improves adhesion therebetween.

However, when cracks etc. occur in the rubber products that is reinforced using steel cords for rubber reinforcement, water penetrated through the crack may cause a steel cord corrosion within the rubber products. Especially in a carcass part that receives repeated stress, cause corrosion fatigue may be caused. However, the above-described Japanese Unexamined Patent Publication No.11-179419 fails to give any consideration on corrosion of the steel cords.

The present invention has been completed in view of such a situation, and an object of the present invention is to provide a filamentous material for rubber reinforcement having excellent corrosion resistance. Another object is to provide a filamentous material for rubber reinforcement having excellent adhesiveness with a rubber in addition to the corrosion resistance. Still another object is to provide a rubber composite material comprising a filamentous material for rubber reinforcement and a rubber(s), both of which are combined.

DISCLOSURE OF THE INVENTION

A filamentous material for rubber reinforcement having excellent corrosion resistance according to the present invention that can solve the above-described problems is comprising

a steel filament and

a coating layer containing Cu and Zn on a surface of the steel filament,

wherein:

a sum total in a length of a peripheral direction of the steel filament in a peripheral direction area in which the coating layer has a thickness of not less than 0.1 micrometers is not less than 50% in a full length in the peripheral direction of the steel filament when a cross section perpendicular to a longitudinal direction of the filamentous material is observed, and

in the above peripheral direction area,

(1) an average Cu content is 50% to 95% by mass in a depth direction area extending from an outermost surface of the coating layer to a position having a depth of 0.01 micrometers, and

(2) an average Zn content is not less than 60% by mass in a depth direction area extending from a position having a depth of 0.1 micrometers of the coating layer to the outermost surface of the steel filament. In addition to the above-described corrosion resistance, the average Cu content of 60% to 85% by mass can give excellent adhesiveness with a rubber. The scope of the present invention also includes a rubber composite material comprising a filamentous material for rubber reinforcement and a rubber(s), both of which are combined.

BRIEF DESCRIPTION OF THE DRAWINGS

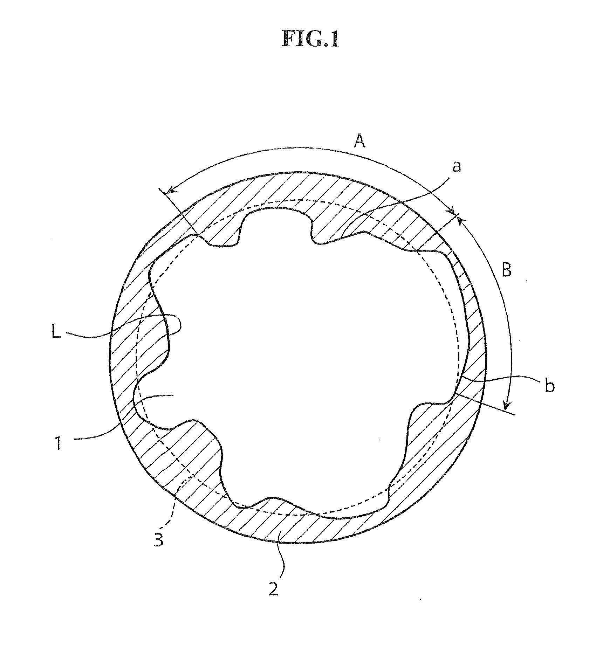

Figure 1 shows a schematic diagram of a cross section perpendicular to the longitudinal direction of a filamentous material for rubber reinforcement.

BEST MODE FOR CARRYING-OUT OF THE INVENTION

The above-described Japanese Unexamined Patent Publication No. 11-179419 obtains a filamentous material for rubber reinforcement provided with a coating layer including higher Cu content in a portion nearer to the surface, by alloying of a brass plating layer and a copper plating layer that have been formed on a steel filament, and also obtains excellent intimate contact properties between a rubber and the filamentous material for rubber reinforcement, due to formation of moderate level of sulfides with a rubber by Cu that exists in the outermost surface of this coating layer.

However, it has been clarified that since Cu is a metal nobler than the steel filament, for example, when cracks etc. occur in the rubber products reinforced using the filamentous material for rubber reinforcement and water penetrates thereinto, the steel filament made of less noble metal than Cu is preferentially corroded. Especially, the above-described Japanese Unexamined Patent Publication No. 11-179419, although reasons are described later, has not strictly specified the component composition of the metal plating layer in the vicinity of the surface of the steel filament, therefore the technique gives inferior corrosion resistance to the filamentous material for rubber reinforcement.

Then, the present inventors have repeated wholehearted examinations in order to improve corrosion resistance of a filamentous material for rubber reinforcement. As a result, it has been found that when a cross section perpendicular to a longitudinal direction of the filamentous material having a coating layer including Cu and Zn, on the surface of a steel filament is observed, the sum total in a length of a peripheral direction of the steel filament in a peripheral direction area in which the coating layer has a thickness of not less than 0.1 micrometers is adjusted not less than a predetermined value in a full length in the peripheral direction of the steel filament, and the component composition of the coating layer in the peripheral direction area is suitably adjusted to excellently solve the above-described problems, thereby leading to completion of the present invention. Operational effects of the present invention, hereinafter, are described.

A filamentous material for rubber reinforcement according to the present invention has a coating layer including Cu and Zn on the surface of a steel filament. The component composition of the steel filament is not especially limited, and usable are steel filaments generally used as raw materials constituting filamentous materials for rubber reinforcement.

When a cross section perpendicular to a longitudinal direction of the filamentous material is observed, the filamentous material for rubber reinforcement according to the present invention has a sum total in a length of a peripheral direction of the steel filament in a peripheral direction area having a thickness of a coating layer including Cu and Zn not less than 0.1 micrometers of a value not less than 50% of a value in the peripheral direction full length of the steel filament. This is described using Figure.

Figure 1 shows a schematic diagram of a cross section perpendicular to a longitudinal direction of a filamentous material for rubber reinforcement. In the Figure, referential numeral "1" represents a steel filament, referential numeral "2" represents a coating layer, referential numeral "3" represents a line showing a position where a depth from an outermost surface of the coating layer is 0.1 micrometers, referential notation "A" represents a peripheral direction area in which the coating layer has a thickness of not less than 0.1 micrometers, referential notation "a" represents a length in a peripheral direction of the steel filament 1 in the peripheral direction area "A" in which the coating layer has a thickness of not less than 0.1 micrometers, referential notation "B" represents a peripheral direction area in which the coating layer has a thickness of less than 0.1 micrometers, referential notation "b" represents a length in the peripheral direction of the steel filament 1 in the peripheral direction area "B" in which the coating layer has a thickness of less than 0.1 micrometers, and referential notation "L" represents a full length in a peripheral direction of the steel filament "1", respectively.

Seemingly observed, the steel filament "1" has a smooth surface and no large irregularity is observed. However, since the surface of the steel filament "1" has minute microscopic irregularities, formation of a coating layer "2" in the surface of the steel filament "1" form a peripheral direction area "A" in which the coating layer has a thickness of not less than 0.1 micrometers, and a peripheral direction area "B" in which the coating layer has a thickness of less than 0.1 micrometers, as shown in Figure 1. Here, existence of larger area of the peripheral direction area "B" in which the coating layer has a thickness of less than 0.1 micrometers to the peripheral direction area "A" reduces the thickness of coating layer and adhesive properties between the filamentous material for rubber reinforcement and a rubber, leading to deterioration of quality as a reinforcing raw material for rubber products.

Here, in the filamentous material for rubber reinforcement according to the present invention, a sum total in a length "a" of a peripheral direction of the steel filament "1" in a peripheral direction area "A" in which the coating layer has a thickness of not less than 0.1 micrometers is not less than 50% in a full length "L" in the peripheral direction of the steel filament "1" when a cross section perpendicular to a longitudinal direction of the filamentous material is observed.

The length "a" in the peripheral direction area "A" of the steel filament having a coating layer thickness not less than 0.1 micrometers, as used herein, means a length in a peripheral direction of the steel filament "1" obtained by connecting intersections between a line "L" representing a full length in a peripheral direction of the steel filament "1", and a line "3" representing a line showing a position where a depth from an outermost surface of the coating layer is 0.1 micrometers, when observed a cross section perpendicular to a longitudinal direction of a filament "1". Thus, the length "a" in the peripheral direction area "A" of the steel filament in which the coating layer has a thickness of not less than 0.1 micrometers is calculated respectively and the sum total is obtained.

And then, a proportion of the sum total in the full length "L" of the steel filament "1" in the peripheral direction is calculated from values of thus obtained the sum total and a full length "L" of the steel filament "1" in a peripheral direction, using a following equation (1).

```
Proportion (%) = [a sum total in a length of a peripheral direction of the steel filament in a peripheral direction area in which the coating layer has a thickness of not less than 0.1 micrometers] / [a full length

in the peripheral direction of the steel filament] × 100 ---(1)
```

In the filamentous material for rubber reinforcement of the present invention, the proportion is not less than 50%. The proportion of less than 50% increases the portion having a smaller coating layer thickness, and therefore deteriorates adhesive properties with a rubber. This proportion is preferably not less than 55%, and more preferably not less than 60%. Higher proportion is more preferable. This proportion is the most preferably 100%. The proportion of 100% means that the coating layer "2" currently formed on the surface of the steel filament "1" has a thickness not less than 0.1 micrometers at all positions.

Figure 1 shows a filamentous material for rubber reinforcement with a shape of almost circular cross section perpendicular to a longitudinal direction that has a surface of a steel filament "1" with projections and depressions, but that does not have depressions and projections on a surface of the filamentous material for rubber reinforcement obtained by coating of this steel filament "1". However, the present invention is not limited to this example, and the coating layer "2" is formed along with the depressions and projections on the surface of the steel filament "1" (not shown). That is, a filamentous material for rubber reinforcement having a cross section perpendicular to longitudinal direction showing depressions and projections is also included in the scope of the present invention.

A cross section perpendicular to the longitudinal direction of the filamentous material for rubber reinforcement, for example, is observable using a scanning electron microscope (SEM). The observation magnification at this time is preferably about 10,000 to 50,000 times.

The filamentous material for rubber reinforcement according to the present invention has, in the above-described peripheral direction area in which the coating layer has a thickness of not less than 0.1 micrometers, an average Cu content in a depth direction area extending from the outermost surface of the coating layer to a position having a depth of 0.01 micrometers gives 50% to 95% by mass, and at the same time has an average Zn content in the depth direction area of the coating layer from a position having a depth of 0.1 micrometers to an outermost surface of the steel filament gives not less than 60% by mass.

When an average Cu content in a depth direction area extending from the outermost surface of the coating layer to a position having a depth of 0.01 micrometers is not less than 50% by mass, Cu existing in the depth direction area reacts with S included in the rubber to form sulfides to improve adhesive properties with the rubber, when compounding with the filamentous material for rubber reinforcement and a rubber. This average Cu content is preferably not less than 55% by mass, and more preferably not less than 60% by mass. However, the average Cu content not less than 60% by mass increases the sulfides of Cu, and make the adhesive strength in an interface of the rubber and the filamentous material for rubber reinforcement exceed strength of rubber itself. Accordingly, for example, in pulling out test of the filamentous material for rubber reinforcement from a composite material obtained by combining the filamentous material for rubber reinforcement and a rubber since destruction occurs by pulling out, not in the interface but within the rubber, the average Cu content of not less than 60% by mass desirably is almost constant pulling out strength. However, an average Cu content of 100% by mass causes excessive reaction between Cu and a rubber, and reduce interface strength by contraries, when combining the filamentous material for rubber reinforcement and a rubber, and therefore the average Cu content is not more than 95% by mass. The average Cu content is preferably not more than 90% by mass, and more preferably not more than 85% by mass.

Especially, the above-described average Cu content in a range of 60% to 85% by mass also desirably improves adhesive properties between a rubber and the filamentous material for rubber reinforcement, in addition to improvement in the above-described corrosion resistance.

On the other hand, an average Zn content in the depth direction area of the coating layer from the position having a depth of 0.1 micrometers to the outermost surface of the steel filament is not less than 60% by mass. When more Zn exists in the vicinity of the steel filament surface in the coating layers currently formed on the surface of the steel filament, Zn is more preferentially corroded rather than the steel filament, resulting in suppression of corrosion of the steel filament, since Zn is less noble metal than the steel filament. The average Zn content is preferably not less than 65% by mass, more preferably not less than 70% by mass, still more preferably not less than 75% by mass, and especially preferably not less than 80% by mass. And it is the most preferably 100% by mass, that is, the whole surface of the steel filament is desirably covered with a coating layer consisting of Zn.

The average Cu content in a depth direction area extending from an outermost surface of a coating layer to a position having a depth of 0.01 micrometers, and the average Zn content in a depth direction area of the coating layer from a position having a depth of 0.1 micrometers of the coating layer to the outermost surface of the steel filament is measured in a procedure shown below. Five optional points are selected from the above-described peripheral direction area in which the coating layer has a thickness of not less than 0.1 micrometers . After processing of samples for cross-section observation with focused ion beam processing observation apparatus (FIB) with micro sampling, light field images of the samples with magnification of approximately 100,000 to 500,000 times were obtained with electron rays having an accelerating voltage of 200KV, using a transmission electron microscope (TEM) with energy dispersive X-ray fluorescence analysis device (EDX). Then, a depth direction area extending from an outermost surface of the coating layer to a position having a depth of 0.01 micrometers, and a depth direction area extending from a position having a depth of 0.1 micrometers of the coating layer to the outermost surface of the steel filament are irradiated with electron rays to quantitatively analyze the component compositions of the coating layer in these depth direction areas. About 3 to 5 spots are selected for irradiation with electron rays, and an averaged measured value is used for the above-described content value.

As FIB, for example, "FB-2000A" produced by Hitachi Ltd. is used, and as a transmission electron microscope with EDX, for example, "HF-2000" produced by Hitachi Ltd. is used.

The filamentous material for rubber reinforcement according to the present invention satisfies the above-described requirements, and methods for manufacturing the filamentous material are not especially limited. Methods shown below are suitably employable.

A sputtering process is suitably used as a method of forming a coating layer including Cu and Zn on the surface of the steel filament. The sputtering process allows easy control of a component composition of the coating layer by varying a composition of a target. That is, since the composition of the target is a composition equal to the component composition of the coating layer, the component composition of the coating layer can be controlled by the composition of the target. The sputtering process allows easy control of the thickness of a coating layer by varying a film formation period. Furthermore, adoption of sputtering process enables strict control of the component composition in a level of 0.01 to 0.1 micrometers, as described above. In detail, the surface of the steel filament is sputtered using a target having a relatively larger amount of content of Zn, and then sputtered using a target having a relatively larger amount of content of Cu. The component in the coating layers in the vicinity of the steel filament has a Zn-rich composition, and at the same time, the component in the vicinity of the outermost surface of the coating layer has a Cu-rich composition.

As the target having a relatively larger amount of content of Zn, it is preferred to use a target including 50% to 100% by mass of Zn in order to control, within a suitable range, an average Zn content in a depth direction area extending from a position having a depth of 0.1 micrometers of the coating layer to the outermost surface of the steel filament. Remainder components of the target are not especially limited, and, for example, they are Cu, Al, Mg, Co, Ni, etc. In order to improve corrosion resistance of the steel filament, it is preferred that the remainder component of the target also comprises less noble metals than the component of the steel filament, and therefore metals, such as A1 and Mg, are especially recommended.

As the target having a relatively larger amount of content of Cu, it is preferred to use a target including 45% to 100% by mass of Cu in order to control, within a suitable range, an average Cu content in a depth direction area extending from the outermost surface of the coating layer to a position having a depth of 0.01 micrometers. The remainder components of the target are not especially limited, and, for example, they are Zn, Co, Ni, Al, Mg etc.

As described above, sputtering using a Cu-including target after sputtering using a Zn-including target makes a two-layer structure to a coating layer formed on the surface of steel filament. In the present invention, whole area of the coating layer currently formed on the surface of steel filament should just include Zn and Cu. Accordingly, for example, even for the case where a layer obtained by sputtering using a Zn-including target does not include Cu, and also for the case where a layer obtained by sputtering using a Cu-including target does not include Zn, these two cases are included in the scope of the present invention, when whole area of the coating layer formed on the surface of steel filament includes Zn and Cu.

Next, wire drawing of the steel filament having the above-described coating layer gives a filamentous material for rubber reinforcement. The drawing condition is not especially limited, and it is preferred to draw the wire so as to obtain a diameter of the filamentous material for rubber reinforcement after wire drawing of approximately 0.05 to 0.5 mm. In addition, the filamentous material for rubber reinforcement is obtained by twisting two or more of the above-obtained filamentous materials.

Although the case where a sputtering process was adopted was heretofore described, the present invention is not limited to the description, and an average Zn content in the vicinity of the steel filament surface and an average Cu content in the vicinity of the filament surface should just satisfy the above mentioned range. That is, after plating of Zn with wet methods, such as electroplating methods, for example, on the steel filament surface, the concerned surface is plated with Cu, and subsequently, Cu-Zn alloy plating layer is formed with a thermal diffusion treatment, and finally the resulting filament is subjected to wire drawing. In consideration that Zn reacts with the steel filament by diffusion to reduce the adhesive properties of the plating layer in thermal diffusion, after coating by brass plating layer that gives Zn content not less than 60% by mass on the surface of the steel filament using hot-dip coating etc., the surface is then plated with brass plating that gives Cu content of 50 to 95% by mass, and subsequently, the obtained filament is directly drawn, without thermal diffusion treatment.

The filamentous material for rubber reinforcement according to the present invention is suitably used, for example, as raw materials for reinforcing tires, hoses and industrial use belts etc. That is, rubber composite materials (for example, tires, hoses and industrial use belts etc.) obtained by combining the filamentous material for rubber reinforcement and a rubber (s) according to the present invention is also included in the present invention.

EXAMPLES

The present invention, hereinafter, is described still in detail, with reference to Examples, and following Examples are not intended to limit the present invention. The following Examples is also carried out with suitable modification in a range that is adapted to spirits of the present invention, and modified Examples are included in technical scopes of the present invention.

[Experiment 1]

A brass plating layer containing Zn was formed on the surface of a steel filament having 1 mm of diameter with a sputtering process, using a target containing 50% to 100% by mass of Zn (remaining component was Cu). Subsequently, a brass plating layer containing Cu was formed on this obtained plating layer with a sputtering process, using a target containing 45% to 100% by mass of Cu (remaining component was Zn). In the following paragraphs, a brass plating layer containing Zn and a brass plating layer containing Cu is collectively referred to as "coating layer."

Next, on various conditions, the steel filament having coating layer was drawn until a filamentous material for rubber reinforcement of diameter of 0.2 mm are obtained.

A cross section perpendicular to a longitudinal direction of the obtained filamentous material for rubber reinforcement was observed with a magnification of 30,000 times using an SEM, and measurement was performed in a full length in the peripheral direction of the steel filament. Next, the filament was investigated for distribution of the thickness of a coating layer. The perimeter length of the steel filament was divided into a peripheral direction area in which the coating layer had a thickness of not less than 0.1 micrometers and a peripheral direction area in which the coating layer had a thickness of less than 0.1 micrometers, and a length was calculated in a peripheral direction of the steel filament in the peripheral direction area in which the coating layer had a thickness of not less than 0.1 micrometers. A sum total of the calculated length in the peripheral direction was determined. A proportion of the sum total to the full length in the peripheral direction of the steel filament was calculated using the above-described equation (1). As a result, the proportion of all the filamentous material for rubber reinforcement shown in the following Table 1 was 70%.

Next, 5 optional points were selected from the above-described peripheral direction area in which the coating layer had a thickness of not less than 0.1 micrometers. The selected samples concerned were processed for samples for cross-section observation by FIB with micro sampling ("FB-2000A" produced by Hitachi Ltd.) The processed samples were subjected to quantitative analysis of component compositions of the coating layer in the depth direction area extending from the outermost surface of the coating layer to a position having a depth of 0.01 micrometers (hereinafter, is referred to as "outermost surface section,") and in the depth direction area extending from a position having a depth of 0.1 micrometers to the outermost surface of the steel filament (hereinafter, is referred to as "lowermost section,") according to the above-described procedure, using TEM with EDX ("HF-2000" produced by Hitachi Ltd.) Measurement of the component composition was carried out at 5 places, respectively, about the outermost surface sections and lowermost sections, and in each measurement spot, measurement was performed in 5 points in a depth direction. And an average Cu content was calculated for the depth direction area extending from the outermost surface of the coating layer to a position having a depth of 0.01 micrometers (outermost surface section), and an average Zn content in the depth direction area extending from a position having a depth of 0.1 micrometers of the coating layer to the outermost surface of the steel filament (lowermost section) was calculated, respectively. That is, an average value means an average obtained from measurements of 25 points since 5 component compositions were measured for 5 measurement positions, respectively.

After three obtained filamentous material for rubber reinforcement were twisted and embedded in a rubber, the obtained sample was subjected to vulcanization, and then measured for a pulling out strength immediately after vulcanization processing according to D2229 of ASTM (American Society for Testing and Materials).

Next, a specimen having a length of 10 m was cut out from the obtained filamentous material for rubber reinforcement, this specimen was immersed for 100 hours in 3% by mass-NaCl aqueous solution, and then a corrosion weight loss of the steel filament before and after immersion was measured.

The measured pulling out strength and corrosion weight loss were evaluated relatively, using a standard filamentous material for rubber reinforcement for comparison. That is, a pulling out strength and corrosion weight loss of the standard filamentous material for rubber reinforcement were measured, a relative value of the pulling out strength and corrosion weight loss of the target filamentous material for rubber reinforcement obtained above was calculated on the condition that the measured value was set as 100.

As the standard filamentous material for rubber reinforcement, used was a steel filament having mono layer plating given so that a component composition in an outermost surface section and a lowermost section might give Cu: 63% by mass and Zn: 37% by mass. Observation of a cross section perpendicular to a longitudinal direction of this standard filamentous material for rubber reinforcement was a value of 70% of a sum total of a length in a peripheral direction of the steel filament in a peripheral direction area in which the coating layer had a thickness of not less than 0.1 micrometers, in a full length in the peripheral direction of the steel filament.

Following Table 1 shows component compositions in the depth direction area extending from the outermost surface of the coating layer to a position having a depth of 0.01 micrometers, and component compositions in the depth direction area extending from a position having a depth of 0.1 micrometers of the coating layer to the outermost surface of the steel filament of the filamentous material for rubber reinforcement obtained above. In this Experiment 1, since a target having a component composition consisting of Cu and Zn was used, the component compositions of the outermost surface section and the lowermost section were also constituted of Cu and Zn.

In addition, the following Table 1 shows relative values of the pulling out strength and corrosion weight loss of each filamentous material for rubber reinforcement collectively.

Table 1

| A component composition of an outermost surface section (mass%) | An evaluation item | A component composition of an lowermost section (mass%) | | | | | |
|---|---|---|---|---|---|---|---|
| | | Cu:67 Zn:37 | Cu:50 Zn:50 | Cu:45 Zn:55 | Cu:40 Zn:60 | Cu:35 Zn:65 | Cu:30 Zn:70 |
| Cu:45 Zn:55 | Values of the pulling put strength | – | 52 | 54 | 56 | 53 | 54 |
| | Values of corrosion weight loss | – | 99 | 95 | 75 | 64 | 53 |
| Cu:50 Zn:50 | Values of the pulling put strength | – | 86 | 82 | 83 | 85 | 84 |
| | Values of corrosion weight loss | – | 98 | 96 | 78 | 65 | 55 |
| Cu:55 Zn:45 | Values of the pulling put strength | – | 97 | 98 | 95 | 93 | 95 |
| | Values of corrosion weight loss | – | 99 | 98 | 73 | 62 | 55 |
| Cu:60 Zn:40 | Values of the pulling put strength | – | 98 | 99 | 93 | 98 | 96 |
| | Values of corrosion weight loss | – | 98 | 93 | 72 | 65 | 56 |
| Cu:63 Zn:37 | Values of the pulling put strength | 100 | – | – | – | – | – |
| | Values of corrosion weight loss | 100 | – | – | – | – | – |
| Cu:65 Zn:35 | Values of the pulling put strength | – | 103 | 102 | 101 | 103 | 105 |
| | Values of corrosion weight loss | – | 101 | 96 | 74 | 66 | 53 |
| Cu:70 Zn:30 | Values of the pulling put strength | – | 104 | 105 | 103 | 102 | 103 |
| | Values of corrosion weight loss | – | 98 | 92 | 71 | 68 | 56 |
| Cu:75 Zn:25 | Values of the pulling put strength | – | 103 | 105 | 103 | 101 | 107 |
| | Values of corrosion weight loss | – | 97 | 91 | 73 | 62 | 51 |
| Cu:80 Zn:20 | Values of the pulling put strength | – | 102 | 101 | 103 | 102 | 105 |
| | Values of corrosion weight loss | – | 99 | 98 | 74 | 64 | 53 |
| Cu:85 Zn:15 | Values of the pulling put strength | – | 102 | 105 | 103 | 107 | 106 |
| | Values of corrosion weight loss | – | 98 | 96 | 72 | 65 | 54 |
| Cu:90 Zn:10 | Values of the pulling put strength | – | 95 | 94 | 96 | 98 | 96 |
| | Values of corrosion weight loss | – | 99 | 98 | 75 | 63 | 55 |
| Cu:95 Zn:5 | Values of the pulling put strength | – | 86 | 85 | 83 | 85 | 86 |
| | Values of corrosion weight loss | – | 97 | 95 | 77 | 64 | 53 |
| Cu:100 | Values of the pulling put strength | – | 55 | 52 | 57 | 53 | 55 |
| | Values of corrosion weight loss | – | 96 | 92 | 76 | 63 | 54 |

Table 1-continued

| A component composition of an outermost surface section (mass%) | An evaluation item | A component composition of an lowermost section (mass%) | | | | | |
|---|---|---|---|---|---|---|---|
| | | Cu:25 Zn:75 | Cu:20 Zn:80 | Cu:15 Zn:85 | Cu:10 Zn:90 | Cu:5 Zn:95 | Zn:100 |
| Cu:45 Zn:55 | Values of the pulling put strength | 57 | 52 | 55 | 53 | 54 | 52 |
| | Values of corrosion weight loss | 45 | 33 | 25 | 14 | 5 | 3 |
| Cu:50 Zn:50 | Values of the pulling put strength | 82 | 81 | 83 | 84 | 82 | 85 |
| | Values of corrosion weight loss | 43 | 35 | 22 | 15 | 6 | 4 |
| Cu:55 Zn:45 | Values of the pulling put strength | 94 | 96 | 97 | 93 | 95 | 96 |
| | Values of corrosion weight loss | 48 | 36 | 24 | 16 | 4 | 2 |
| Cu:60 Zn:40 | Values of the pulling put strength | 95 | 99 | 97 | 103 | 98 | 99 |
| | Values of corrosion weight loss | 42 | 33 | 26 | 17 | 8 | 3 |
| Cu:63 Zn:37 | Values of the pulling put strength | – | – | – | – | – | – |
| | Values of corrosion weight loss | – | – | – | – | – | – |
| Cu:65 Zn:35 | Values of the pulling put strength | 110 | 108 | 105 | 103 | 102 | 103 |
| | Values of corrosion weight loss | 44 | 31 | 22 | 16 | 7 | 2 |
| Cu:70 Zn:30 | Values of the pulling put strength | 105 | 104 | 105 | 102 | 103 | 106 |
| | Values of corrosion weight loss | 46 | 33 | 24 | 14 | 6 | 2 |
| Cu:75 Zn:25 | Values of the pulling put strength | 102 | 103 | 104 | 108 | 103 | 104 |
| | Values of corrosion weight loss | 44 | 34 | 21 | 16 | 5 | 3 |
| Cu:80 Zn:20 | Values of the pulling put strength | 108 | 103 | 105 | 106 | 101 | 108 |
| | Values of corrosion weight loss | 42 | 32 | 23 | 14 | 8 | 4 |
| Cu:85 Zn:15 | Values of the pulling put strength | 103 | 101 | 104 | 108 | 103 | 105 |
| | Values of corrosion weight loss | 43 | 35 | 25 | 13 | 7 | 2 |
| Cu:90 Zn:10 | Values of the pulling put strength | 93 | 95 | 94 | 95 | 94 | 96 |
| | Values of corrosion weight loss | 43 | 35 | 25 | 16 | 7 | 3 |
| Cu:95 Zn:5 | Values of the pulling put strength | 87 | 88 | 82 | 85 | 86 | 83 |
| | Values of corrosion weight loss | 42 | 34 | 21 | 13 | 5 | 4 |
| Cu:100 | Values of the pulling put strength | 53 | 52 | 54 | 56 | 53 | 55 |
| | Values of corrosion weight loss | 45 | 33 | 25 | 14 | 6 | 3 |

Table 1 clearly shows that when the Cu content in the outermost surface section is 50% to 95% by mass and the Zn content in the lowermost section is not less than 60% by mass, relative values of corrosion weight loss gives values less than 100, resulting in filamentous materials for rubber reinforcement having excellent corrosion resistance. Especially when the Cu content in the outermost surface section is 60% to 85% by mass, the relative value of the pulling out strength exceeds 100, resulting in a filamentous material for rubber reinforcement having excellent adhesive properties with a rubber.

[Experiment 2]

Same procedure as in the Experiment 1 was repeated to obtain a filamentous material for rubber reinforcement that gives 70% by mass of Cu and 30% by mass of Zn of a component composition in a depth direction area extending from the outermost surface of the coating layer to a position having a depth of 0.01 micrometers, and that gives 5% by mass of Cu and 95% by mass of Zn of a component composition in a depth direction area extending from a position having a depth of 0.1 micrometers of the coating layer to the outermost surface of the steel filament.

At this time, the formation period in sputtering was varied to adjust a proportion of the sum total in a length of a peripheral direction of the steel filament in a peripheral direction area in which the coating layer has a thickness of not less than 0.1 micrometers, within a range of 40 to 100% in a full length in the peripheral direction of the steel filament. As in the Experiment 1, the pulling out strength and corrosion weight loss was measured by the obtained filamentous material for rubber reinforcement, and the relative value was calculated.

Following Table 2 shows each proportion of the above-described sum totals, and the pulling out strengths and corrosion weight losses of the obtained filamentous material for rubber reinforcement.

Table 2

| | Proportion (%) | | | | | | | |
|---|---|---|---|---|---|---|---|---|
| | 40 | 45 | 50 | 55 | 60 | 70 | 80 | 100 |
| Values of the pulling put strength | 63 | 35 | 90 | 96 | 101 | 103 | 104 | 103 |
| Values of corrosion weight loss | 58 | 75 | 12 | 8 | 5 | 6 | 4 | 3 |

Table 2 clearly shows that when the proportion of the sum total is not less than 50%, the relative values of corrosion weight loss give values less than 100, and thus a filamentous material for rubber reinforcement having excellent corrosion resistance is obtained. However, even when the proportion of the sum total is not less than 40% and less than 50%, the relative values of corrosion weight loss give values less than 100 to show excellent corrosion resistance, but the relative value of pulling out strength shows a remarkably smaller value to cause deterioration of adhesive properties with a rubber, failing to be suitable for practical use.

INDUSTRIAL APPLICABILITY

The present invention provides a filamentous material for rubber reinforcement having excellent corrosion resistance. In addition to corrosion resistance, the present invention provides a filamentous material for rubber reinforcement having excellent adhesive property with a rubber (s). Furthermore, the present invention provides a rubber composite material combined the filamentous material for rubber reinforcement and a rubber(s).

**Claims**

1. A filamentous material for rubber reinforcement having excellent corrosion resistance, comprising:

   a steel filament and
   a coating layer containing Cu and 2n on a surface of the steel filament,

   wherein:

   a sum total in a length of a peripheral direction of the steel filament in a peripheral direction area in which the coating layer has a thickness of not less than 0.1 micrometers is not less than 50% in a full length in the peripheral direction of the steel filament when a cross section perpendicular to a longitudinal direction of the filamentous material is observed, and
   in the above peripheral direction area,

   (1) an average Cu content is 50% to 95% by mass in a depth direction area extending from an outermost surface of the coating layer to a position having a depth of 0.01 micrometers, and
   (2) an average Zn content is not less than 60% by mass in a depth direction area extending from a position having a depth of 0.1 micrometers of the coating layer to the outermost surface of the steel filament.

2. The filamentous material for rubber reinforcement according to claim 1, wherein the average Cu content is 60% to 85% by mass.

3. A rubber composite material comprising a filamentous material for rubber reinforcement according to claim 1 or 2 and a rubber, both of which are combined.

# FIG.1

## INTERNATIONAL SEARCH REPORT

| International application No. |
| --- |
| PCT/JP2005/006699 |

**A. CLASSIFICATION OF SUBJECT MATTER**
Int.Cl$^7$ D07B1/06, B60C9/00, C22C9/04, C23C28/02

According to International Patent Classification (IPC) or to both national classification and IPC

**B. FIELDS SEARCHED**

Minimum documentation searched (classification system followed by classification symbols)
Int.Cl$^7$ D07B1/06, B60C9/00, C22C9/04, C23C28/02

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2-256503 A (Bridgestone Corp.), 17 October, 1990 (17.10.90), Full text (Family: none) | 1-3 |
| A | JP 2-61188 A (Hiroyuki KANEI), 01 March, 1990 (01.03.90), Full text (Family: none) | 1-3 |
| A | JP 2-61187 A (Hiroyuki KANEI), 01 March, 1990 (01.03.90), Full text (Family: none) | 1-3 |

☐ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 July, 2005 (29.07.05) | 16 August, 2005 (16.08.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**EP 1 731 661 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11179419 A